# EUROPEAN PATENT APPLICATION

(11) **EP 1 466 950 A1**
(43) Date of publication of application: **13.10.2004**
(21) Application number: 04252138.5
(22) Date of filing: 08.04.2004
(51) Int. Cl.: C09D 9/00

(54) **Coating film-stripping solution and coating film-stripping method**

(30) Priority: 10.04.2003 JP 2003106550
(71) Applicant: KANSAI PAINT CO., LTD., Amagasaki-shi Hyogo 661-0964 (JP)
(72) Inventor: Oonishi, Kazuhiko, Hiratsuka-shi Kanagawa-ken 254-0016 (JP); Fujibayashi, Toshio, Hiratsuka-shi Kanagawa-ken 254-0016 (JP); Yamamoto, Yoichiro, Hiratsuka-shi Kanagawa-ken 254-0016 (JP)
(74) Representative: Stuart, Ian Alexander

(57) **Abstract**

A coating film-stripping solution containing, as essential components, at least one stripping substance selected from the group consisting of alkali metals, alkali metal compounds, phosphoric acids, phosphoric acid compounds, phosphates, organic acids and organic acid salts, and an amide compound; and a coating film-stripping method by use of the above coating film-stripping solution.

## Description

### Background Art:

### Field of the Invention:

The present invention relates to a coating film-stripping solution and a coating film-stripping method.

### Description of the Background Art:

A coating object is generally mounted on a coating object support such as a hanger, angle bar, truck and the like prior to being subjected to a coating step. Accordingly, coating of the coating object may result adhesion of a coating composition onto the coating object support. In a coating line, for example, an automobile coating line, an automobile coating object is mounted on a truck and subjected to coating an intercoat coating composition, followed by heat curing, coating a topcoat coating composition, and heat curing to form a cured coating film onto the automobile. In such a coating line, the coating composition is unnecessarily coated onto the truck, and heat curing forms a thick, tough, cured coating film onto the truck.

Such unnecessary coating film may inhibit an earth of the automobile and truck, resulting in causes of fire and of troubles in a coating apparatus. Consequently, an old coating film is removed prior to coating the automobile with a new coating composition.

Removal of the coating film unnecessarily adhered onto the truck is carried out by a method which comprises subjecting a coating object support with the unnecessary coating film to incineration, a method which comprises coating a coating composition-stripping solution onto the surface of the unnecessary coating film, or a method which comprises dipping a coating object support with the unnecessary coating film into a coating composition-stripping solution, followed by stripping.

However, the incineration method may produce problems of environmental pollution, for example, bad odor, smoke, etc. developed on incineration, and of a standpoint of working.

A chlorine based hydrocarbon solvent such as methylene chloride is known as a coating composition-stripping solution, resulting in producing of safety and health because of high volatility and of producing a rash on the hand, etc. when contacted. Recently, the use of N-methyl-2-pyrrolidone as a stripping agent free of troubles from the standpoints of safety and health is known (see Japanese Patent Application Laid-Open Nos. 279607/93, 87879/97, and 331435/98).

As a treating method of an epoxy resin cured product, a method, which comprises treating with a treating solution containing an epoxy resin cured product-decomposing catalyst and an organic solvent to decompose and dissolve the epoxy resin cured product, is known (see Japanese Patent Application Laid-Open No. 172426/01).

However, in the case where the stripping agent disclosed in Japanese Patent Application Nos. 279607/93 and 87879/97 is coated onto a coating object support having a complicated shape, for example, a truck composed of a frame, iron net, etc., a hanger having a 3-letter shape, and the like, the stripping solution may sag, resulting in that an area, where a coating weight of the stripping solution is less, particularly a lengthwise surface, may show poor stripping properties of the coating film, that a coating time of the stripping solution is required to be increased, that a coating step of the stripping solution may take a long period of time, and that workability and efficiency may become poor.

Japanese Patent Application Laid-Open No. 87879/97 discloses a combination of N-methyl-2-pyrrolidone, a thickening agent and a wax, but does not disclose details of the thickening agent and wax. All of the thickening agent and wax are not to provide desirable effects.

Japanese Patent Application Laid-Open No. 172426/01 discloses alkali metals, phosphoric acids, and salts thereof as the epoxy resin cured product-decomposing catalyst used in the treatment so as not to be possible to sufficiently strip the cured coating strongly adhered onto a substrate. Even if stripped, it may take so long time as to be impracticable. The use of the above catalyst may result unsatisfactory strippability to a coating film other than the epoxy resin cured product.

### Summary of the Invention:

It is an object of the present invention to provide a coating film-stripping solution showing good strippability.

It is another object of the present invention to provide a coating film-stripping solution capable of easily and efficiently stripping the cured coating film in a short period of time.

The present inventors made extensive studies for the purpose of solving the above problems in the art to find out that the use of a coating film-stripping solution containing particularly an amide compound and a lower alkoxy metal can solve all of the above problems in the art, resulting in accomplishing the present invention.

That is, the present invention provides a coating film-stripping solution containing, as essential components, at least one stripping substance selected from the group consisting of alkali metals, alkali metal compounds, phosphoric acids, phosphoric acid compounds, phosphates, organic acids and organic acid salts, and an amide compound.

In the coating film-stripping solution of the present invention, the coating film-stripping substance is preferably a lower alkoxy alkyl metal compound, more preferably sodium ethoxide.

In the coating film-stripping solution of the present invention, the coating film-stripping solution further contains a stripping co-solvent, preferably a solvent to cause a coating film to be stripped to swell, more preferably a mixed solvent of a solvent (A) having a water-solubility of 5% by weight or more with a solvent (B) having a water-solubility less than 5% by weight.

The present invention also provides a coating film-stripping method, which comprises coating the above coating film-stripping solution onto the surface of a cured coating film adhered to a substrate, followed by stripping the cured coating film; a coating film-stripping method, which comprises coating the above coating film-stripping solution onto the surface of a cured coating film adhered to a substrate, followed by washing with water to strip the cured coating film, and drying; a coating film-stripping method, which comprises coating the above coating film-stripping solution onto the surface of a cured coating film adhered to a substrate, followed by stripping the cured coating film, washing with water, and drying; a coating film-stripping method, which comprises coating the above coating film-stripping solution onto the surface of a cured coating film adhered to a substrate, followed by heating at a temperature of 40 to 100°C; and a coating film-stripping method, which comprises coating the above coating film-stripping solution onto the surface of a cured coating film adhered to a substrate, followed by partly or wholly covering the surface of the resulting coating film with a sheet.

### Detailed Description of the Invention:

The coating film-stripping solution of the present invention contains, as the essential components, at least one coating film-stripping substance selected from the group consisting of alkali metals, alkali metal compounds, phosphoric acids, phosphoric acid compounds, phosphates, organic acids and organic acid salts, and an amide compound.

The alkali- metals may include, for example, sodium, potassium, lithium, ruthenium, selenium and the like.

The alkali metal compounds may include, for example, as compounds of the above alkali metals respectively, alkoxides, hydroxides, borides, amide compounds, fluorides, chlorides, bromides, iodides and the like, further may include, as compounds of the above alkali metals, borates, phosphates, carbonates, sulfates, nitrates, organic acid salts and the like. These salts may include a primary salt having one metal and two hydrogens, a secondary salt having two metals and one hydrogen, and a tertiary salt having three metals, and may include an acid salt, alkaline salt and neutral salt.

The phosphoric acids may include, for example, phosphoric acid, metaphosphoric acid, hypophosphoric acid, phosphorous acid, hypophosphorous acid, pyrophosphoric acid, trimetaphosphoric acid, tetrametaphosphoric acid, pyrophosphorous acid and the like.

The phosphoric acid compounds may include, for example, as compounds of the above phosphoric acids, hydroxides, borides, amide compounds, fluorides, chlorides, bromides, iodides and the like.

The phosphates may include, for example, as salts of the above phosphoric acids, salts of Li, Na, K, Lu, Se, Be, Mg, Ca, Sr, Ba, Ti, Zr, Cr, Mn, Fe, Co, Ni, Cu, Ag, Pa, Zn, A1, Ga, Sn, NH₃ and the like respectively. These salts may include a primary salt containing one metal and two hydrogens, a secondary salt containing two metals and one hydrogen, and a tertiary salt containing three metals, and may also include an acid salt, alkaline salt and neutral salt.

The organic acids may include, for example, acrylic acid, adipic acid, ascorbic acid, aspartic acid, aminobenzoic acid, alginic acid, benzoic acid, oleic acid, formic acid, citric acid, glycolic acid, glutamic acid, cinnamic acid, succinic acid, acetic acid, salicylic acid, oxalic acid, tartaric acid, toluene sulfonic acid, nicotinic acid, lactic acid, uric acid, halogen-substituted acetic acid, phthalic acid, benzene sulfonic acid, malonic acid, butyric acid, malic acid and the like.

The organic acid salts may include, for example, as salts of the above organic acids, salts of Li, Na, K, Lu, Se, Be, Mg, Ca, Sr, Ba, Ti, Zr, Cr, Mn, Fe, Co, Ni, Cu, Ag, Pa, Zn, Al, Ga, Sn, NH₃ and the like respectively. These salts may include a primary salt containing one metal and two hydrogens, a secondary salt containing two metals and one hydrogen, and a tertiary salt containing three metals, and may also include an acid salt, alkaline salt and neutral salt.

The stripping substance may preferably include alkalimetal compounds, more preferably lower alkoxyalkali metal compounds having 1 to 5 carbon atoms, preferably 1 to 3 carbon atoms from the standpoint of showing good strippability to various kinds of cured coating films. Specific examples may include sodium methoxide, sodium ethoxide, sodium propoxide and the like.

The amide compound used in the coating film-stripping solution of the present invention may include, for example, pyrrolidone compounds, for example, 2-pyrrolidone, 3-pyrrolidone, N-alkyl-2-pyrrolidone such as N-methyl-2-pyrrolidone, N-ethyl-2-pyrrolidone, N-propyl-2-pyrrolidone, and the like, 5-alkyl-2-pyrrolidone such as 5-methyl-2-pyrrolidone, 5-ethyl-2-pyrrolidone, 5-propyl-2-pyrrolidone and the like, N-vinyl-2-pyrrolidone, N-alkyl-3-pyrrolidone such as N-methyl-3-pyrrolidone, N-ethyl-3-pyrrolidone, N-propyl-3-pyrrolidone and the like; amide compounds such as formamide, N-methylformamide, N,N-dimethylformamide, N,N-diethylformamide, acetoamide, N-methylacetoamide, N,N-dimethylacetoamide and the like, and the like. Of these, N-methyl-2-pyrrolidone is particularly preferable.

In addition to the stripping substance and the amide compound, the coating film-stripping solution of the present invention may preferably contain a stripping co-solvent other than the amide compound, particularly a solvent to cause a coating film to be stripped to swell.

The stripping co-solvent may arbitrarily be selected depending on a coating film to be stripped. The solvent to cause the coating film to be stripped to swell is such that, for example, the stripping co-solvent is contacted onto the surface of the coating film to be stripped, followed by leaving to stand at 20°C for one hour, removing the solvent remaining on the surface of the coating film, comparing a pencil hardness of the coating film in an area contacted with the solvent with that of the coating film in an area non-contacted with the solvent, examining a pencil hardness change, for example, according to the pencil hardness JIS K 5600-5-4, rank 6B (soft) to 6H (hard), and evaluating that the coating film is caused to swell, if a pencil hardness of the coating film in the area contacted with the solvent is reduced compared with that of the coating film in the area non-contacted with the solvent, for example, a pencil hardness of the former is B, and a pencil hardness of the latter is F, the pencil hardness of the former is reduced compared with that of the latter by two ranks.

The stripping co-solvent may arbitrarily be selected from the following solvent (A) and/or solvent (B).

For the purpose of avoiding troubles of determining a stripping co-solvent depending on a coating film to be stripped, for example, a mixed solvent of a solvent (A) having a water-solubility of 5% by weight or more with a solvent (B) having a water-solubility less than 5% by weight may be used. In the mixed solvent, at least one of the solvent (A) and solvent (B) may be a solvent to cause the coating film to swell.

The water solubility is determined by dropping water little by little into a solvent until the water is separated from the solvent, or a resulting mixture becomes slightly cloudy to measure a dropped amount of water, and calculating a weight percentage of the dropped amount of water relative to a total weight of a mixture of the solvent and dropped water to determine a water solubility. Measurements were carried out at 20°C.

The solvent (A) may include any solvent known in the art, preferably may include, for example, poly- or monoalkylene glycols such as ethylene glycol, propylene glycol, diethylene glycol and the like; mono- or dialkyl ethers of alkylene glycol such as ethylene glycol monomethyl ether, ethylene glycol monoethyl ether, diethylene glycol monoethyl ether and the like; (poly)alkylene glycol alkyl ether acetates such as ethylene glycol methyl ether acetate, diethylene glycol ethyl ether acetate, ethylene glycol ethyl ether acetate (cellosolve acetate) and the like; ketones such as cyclohexanone, alcohols such as butanol, and the like. These solvents may be used alone or in combination. Of these, ketones such as cyclohexanone, alcohols such as butanol, mono- or polyalkylene glycols and (poly)alkylene glycol alkyl ether acetates are more preferable.

The solvent (B) used in the coating film-stripping solution of the present invention may include any solvent known in the art, specifically may include, for example, toluene, xylene, kerosene, mineral spirit, paraffin solvent such as octane, nonane, decane, dodecane and the like, naphthene solvent including cycloalkane contained in petroleum and alkyl-substituted cycloalkane, a solvent having carbon atoms less than 15 such as cyclohexane, cyclopentane, 1,3-dimethylcyclopentane and the like, turpentine oil, and the like. These solvent may be used alone or in combination. Of these, the paraffin solvent and aromatic solvent-containing ones are-preferable.

Trade names of the solvent (B) may include, for example, Swasol #1500 (trade name, marketed by Maruzen Petro Chem, mixed solvent, aromatic compound content: about 98%), Swasol #1000 (trade name, marketed by Maruzen Petro Chem, mixed solvent, aromatic compound content: about 98%), and the like.

The coating film-stripping solution of the present invention may optionally contain a hydrocarbon compound, which has mainly 15 to 20 carbon atoms and is liquid at 20°C, specifically, for example, pentadecane, heptadecane, octadecane, nonadecane, eicosane and the like. These hydrocarbon compounds may be straight-chain hydrocarbon or branched-chain hydrocarbon.

Mixing ratios of respective components of the coating film-stripping solution in the present invention are represented by a percentage based on a total weight of respective components as follows.

A mixing ratio of the stripping substance is in the range of 0.1 to 95% by weight, preferably 0.5 to 10% by weight. When less than 0.1% by weight, strippability may be reduced. A mixing ratio more than 95% by weight may reduce strippability of the coating film, storage stability of the coating film-stripping solution, and coating workability.

A mixing ratio of the amide compound is in the range of 5 to 99.9% by weight, preferably 10 to 99.5% by weight. When less than 5% by weight, strippability may be reduced. A mixing ratio more than 99.9% by weight may reduce strippability of the coating film, make recovering difficult, and result high cost.

A mixing ratio of the stripping co-solvent is in the range of 0 to 94% by weight, preferably 1 to 89.5% by weight. When more than 94% by weight, strippability of the coating film may be reduced. A mixing ratio of 1% by weight or more may be preferable from the standpoint of coating workability.

A mixing weight ratio of solvent (A)/solvent (B) is in the range of 0 to 100% by weight/100 to 0% by weight, preferably 5 to 95% by weight/95 to 5% by weight.

A mixing ratio of solvent (B) in the range of 5% by weight or more may preferably improve stability of the coating film-stripping solution, and wetting properties to the coating film. When more than 95% by weight, stability of the coating film-stripping solution may be reduced.

The coating film-stripping solution of the present invention may optionally contain additives known in the art, for example, pigments, dyes, fillers, anti-sagging agents, waxes and the like.

The coating film-stripping solution of the present invention may be used for stripping a coating film formed from a film-forming composition such as a coating composition, adhesive, pressure-sensitive adhesive, ink, resist solution and the like. The coating film to be stripped may include a new coating film and an old coating film, and may also include a cured coating film and a non-cured coating film.

A material of a substrate, onto which the coating film-forming composition is coated, may include any ones without particular limitations so long as the coating film-stripping solution gives no adverse effects such as dissolution, change in properties, change in shape and the like on the material, and specifically may include, for example, a metal such as iron, stainless steel, zinc, copper, tin, aluminum, alloys thereof, plated ones thereof and the like, plastics, paper, wood, fiber, an inorganic substance such as glass, concrete, earthware, clay tile and the like, and the like. The substrate may optionally be subjected to a surface treatment or coating.

An article as the substrate may include, for example, cars, ships, architectural structures, building structures, conveyors, jigs, general machines, domestic appliances, displays, daily necessaries, furnitures, and related instruments, related parts, etc.

With variations depending on a kind of the coating film and environmental temperature, the coating film-stripping solution may usually be contacted with the coating film, followed by leaving to stand for about one minute to 7 days, preferably about 10 minutes to one day so as to strip the coating film.

The coating film-stripping method by used of the coating film-stripping solution of the present invention is explained hereinafter.

The coating film-stripping method of the present invention may preferably be applied to a continuous coating line, for example, successively comprising the following steps: ① a step of mounting a coating object on a coating object support, ② a step of coating, ③ a step of heat curing or irradiating actinic rays, ④ a step of removing the coating object from the coating object support, ⑤ a step of coating the coating film-stripping solution of the present invention onto the coating object support, and ⑥ a step of removing the coating film-stripping solution and the coating film to be stripped.

In the coating film-stripping method of the present invention, the coating object support used in the above step ① may include, for example, a hanger, angle bar, truck and the like.

In the coating film-stripping method of the present invention, the coating in the step ② may be carried out, for example, by an electrostatic spray coating, non-electrostatic spray coating, electrodeposition coating, roller coating, brushing and the like.

In the coating film-stripping method of the present invention, heat curing in the step ③ may be carried out by use of hot air.

The actinic rays used in the step ③ may include, for example, infrared rays, far infrared rays, ultraviolet light, visible light, electron radiation and the like.

In the coating film-stripping method of the present invention, coating of the coating film-stripping solution in the above step ⑤ may be carried out, for example, by spray coating, brushing and the like. A coating film thickness from the coating film-stripping solution may preferably be in the range of 10 to 1000 µm, particularly 20 to 500 µm.

In the coating film-stripping method of the present invention, removal of the coating film-stripping solution and the coating film to be stripped may be carried out, for example, by washing with high pressure water, by stripping by use of a tool such as a spatula and the like, and by stripping by shot blasting.

Embodiments of the coating film-stripping method of the present invention are explained hereinafter.

The coating film-stripping method in a first embodiment comprises coating the coating film-stripping solution of the present invention onto the surface of a cured coating film adhered to a coating object support, followed by stripping the cured coating film.

In the above first embodiment, the coating object support may include ones used in the step ①, the method of coating the coating film-stripping solution onto the cured coating film may include the method used in step ⑤, and the method of stripping the cured coating film may include the method used in step ⑥.

The coating film-stripping method in a second embodiment comprises coating the coating film-stripping solution of the present invention onto the surface of a cured coating film adhered to a coating object support, followed by washing with water to strip the cured coating film, and drying.

In the above second embodiment, the coating object support may include ones used in step ①, the method of coating the coating film-stripping solution of the present invention onto the surface of the cured coating film may include the method used in step ⑤, and the method of stripping the cured coating film by washing with water may include the method of washing with high pressure water in step ⑥.

The coating film-stripping method in a third embodiment comprises coating the coating film-stripping solution of the present invention onto the surface of a cured coating film adhered to the coating object support, followed by stripping the cured coating film, washing with water, and drying.

The above third embodiment is such that stripping of the cured coating film by the method of the above second embodiment is followed by washing with water, high pressure water, dipping water, or the like, and drying or subjecting to forced drying to remove water.

The coating film-stripping method in a fourth embodiment comprises coating the coating film-stripping solution of the present invention onto the surface of a cured coating film adhered to the coating object support, followed by heating at a temperature of 40 to 100°C, preferably 50 to 80°C.

In the above fourth embodiment, the method of coating the coating film-stripping solution of the present invention may include the method used in step ⑤. Heating of the coated coating film-stripping solution may be carried out, for example, by hot air.

The coating film-stripping method in a fifth embodiment comprises coating the coating film-stripping solution of the present invention onto the surface of a cured coating film adhered to the coating object support, followed by partly or wholly covering the surface of the resulting coating film with a sheet.

The sheet may include sheets known in the art without particular limitations unless reduction in covering properties due to dissolution and deterioration by the coating film-stripping solution makes removal impossible, and specifically may include, for example, mono- or laminated synthetic resin sheets of synthetic resins such as polyethylene, polypropylene, fluorocarbon resin, silicone resin, polycarbonate resin and the like; metal foils such as aluminum foil; fibers such as paper, cloth, etc. treated or untreated with silicone, wax and the like respectively; laminates of at least two of the synthetic resin sheets, metal foils and fibers; and the like.

A thickness of the sheet is not particularly limited, and is in the range of about 10 to 2,000 µm, preferably 30 to 200 µm.

### Effect of the Invention:

The present invention provides the following particular effects from the constitution of the present invention.
① The coating film-stripping solution of the present invention essentially composed of the stripping substance and the amide compound. The stripping substance has a function to break down crosslinking of the cured coating film to low molecules. The amide compound has a function to promote an action of the stripping substance such that the stripping substance can penetrate through the cured coating film and efficiently break down the crosslinked film. The combination of the above functions can provide an effect showing good strippability.
② A combined use of the stripping co-solvent further promotes penetration of the stripping substance into the cured coating film, resulting in improving strippability.
③ The coating film-stripping solution of the present invention can easily strip the cured coating film without damaging the coating object support, and can also strip the cured coating film in a short period of time without environmental pollution.
④ The cured coating film contacted with the coating film-stripping solution can be easily stripped from the substrate with water or the like.
⑤ The coating film-stripping solution and cured coating film adhered to the substrate after being stripped are easily removed, and the following operation such as coating can easily be carried out.
⑥ Application of the coating film-stripping method of the present invention by use of the coating film-stripping solution of the present invention can further improve stripping effect.

### Example

The present invention is explained more in detail by the following Examples.

### Example 1

Amilac 1000 White (trade name, marketed by Kansai Paint Co., Ltd., acryl melamine-curing coating composition) was spray coated an iron plate (length 15 cm, width 30 cm), followed by heat curing at 130°C for 60 minutes to obtain a 100 µm coating test panel.

A coating film-stripping solution (N-methyl-2-pyrrolidone/sodium ethoxide/N-butanol (water solubility 7%)/Swasol #1000 (trade name, marketed by Maruzen Petro Chem, mixed solvent, aromatic compound content about 98%, solvent (B), water solubility 1% or less, and so forth) = 30/1/10/59 (% by weight) was spray coated onto the coating test panel so as to be 100 µm, followed by leaving to stand at 20°C for 24 hours. As the result, the cured coating film was wholly stripped from the iron plate with little or no difficulty. The coating film-stripping solution remained on the iron plate was simply removed with water.

Change in hardness on the surface of the cured coating film due to contact with N-butanol as a solvent, specifically change in hardness between a contacted portion of the cured coating film and a non-contacted portion of the cured coating film by comparison of a hardness of the contacted portion of the cured coating film with a hardness of the non-contacted portion of the cured coating film in accordance with JIS K 5600-5-4 pencil hardness test as above (hereinafter referred to as the same), was such that the former was reduced by one rank or more.

### Example 2

Example 1 was duplicated except that N-methyl-2-pyrxolidonelsddium ethoxide/cyclohexanone (water solubility 2%)/Swasol #1000 = 30/1/30/39 (% by weight) was used as a coating film-stripping solution.

As the result, the cured coating film was wholly stripped from the iron plate with little or no difficulty. The coating film-stripping solution remained on the iron plate was simply removed with water.

### Example 3

Example 1 was duplicated except that N-methyl-2-pyrrolidone/sodium ethoxide/N-butanol/Swasol #1000 = 30/10/30/30 (% by weight) was used as a coating film-stripping solution.

As the result, the cured coating film was wholly stripped from the iron plate with little or no difficulty. The coating film-stripping solution remained on the iron plate was simply removed with water.

### Example 4

Example 1 was duplicated except that N-methyl-2-pyrrolidone/sodium ethoxide/N-butanol/Swasol #1000 = 20/5/40/35 (% by weight) was used as a coating film-stripping solution.

As the result, the cured coating film was wholly stripped from the iron plate with little or no difficulty. The coating film-stripping solution remained on the iron plate was simply removed with water.

### Example 5

Example 1 was duplicated except that N-methyl-2-pyrrolidone/sodium ethoxide/N-butanol/Swasol #1000 = 50/5/30/25 (% by weight) was used as a coating film-stripping solution.

As the result, the cured coating film was wholly stripped from the iron plate with little or no difficulty. The coating film-stripping solution remained on the iron plate was simply removed with water.

### Example 6

Example 1 was duplicated except that N-methyl-2-pyrrolidone/sodium ethoxide/N-butanol = 50/5/45 (% by weight) was used as a coating film-stripping solution.

As the result, the cured coating film was wholly stripped from the iron plate with little or no difficulty. The coating film-stripping solution remained on the iron plate was simply removed with water.

### Example 7

Example 1 was duplicated except that N-methyl-2-pyrrolidone/sodium ethoxide/cyclohexanone = 50/5/45 (% by weight) was used as a coating film-stripping solution.

As the result, the cured coating film was wholly stripped from the iron plate with little or no difficulty. The coating film-stripping solution remained on the iron plate was simply removed with water.

### Example 8

Example 1 was duplicated except that in place of the coating test panel used in Example 1, a coating test panel prepared by roller coating KP Color No. 1510 White (trade name, marketed by Kansai Paint Co., Ltd., white topcoating composition for use in polyester-melamine resin based precoat metal) onto a zinc phosphate-treated galvanized steel sheet, followed by heat curing at a substrate-reaching maximum temperature of 220°C for 60 seconds to form a cured coating film having a thickness of 2 µm, was used.

As the result, the cured coating film was wholly stripped from the steel sheet with little or no difficulty. The coating film-stripping solution remained on the steel sheet was simply removed with water.

The change in hardness on the surface of the cured coating film due to contact with N-butanol was such that the pencil hardness was reduced by one rank or more due to contact with N-butanol.

### Example 9

Example 8 was duplicated except that KP Color No. 8406 Primer (trade name, marketed by Kansai Paint Co., Ltd., modified epoxy-urethane resin based primer)-was used in place of the above KP Color No. 1510 White (the above trade name).

As the result, the cured coating film was wholly stripped from the steel sheet with little or no difficulty. The coating film-stripping solution remained on the steel sheet was simply removed with water.

The change in hardness on the surface of the cured coating film due to contact with N-butanol was such that the pencil hardness was reduced by one rank or more due to contact with N-butanol.

### Example 10

Example 1 was duplicated except that in place of the coating test panel of Example 1, a coating test panel prepared by electrodeposition coating Elecron 9600 (trade name, marketed by Kansai Paint Co., Ltd., amine-modified epoxy resin/blocked polyisocyanate-curing coating composition) onto an iron plate (length 15 cm, width 30 cm), followed by heat curing at 130°C for 60 minutes to form a cured coating film having a thickness of 80 µm, was used.

As the result, the cured coating film was wholly stripped from the iron plate with little or no difficulty. The coating film-stripping solution remained on the iron plate was simply removed with water.

The change in hardness on the surface of the cured coating film due to contact with N-butanol was such that the pencil hardness was reduced by one rank or more due to contact with N-butanol.

### Example 11

A coating test panel was prepared in the same manner as in Example 10 except that in place of the coating film-stripping solution of Example 1, a coating film-stripping solution comprising N-methyl-2-pyrrolidone/sodium ethoxide/hydrocarbon compound having mainly 15 to 20 carbon atoms/N-butanol/Swasol #1000 = 50/1/1/25/23 (% by weight) was used. The above coating film-stripping solution was coated in the same manner as in Example 1.

As the result, the cured coating film was wholly stripped from the iron plate with little or no difficulty. The coating film-stripping solution remained on the iron plate was simply removed with water.

The change in hardness on the surface of the cured coating film due to contact with N-butanol was such that the pencil hardness was reduced by one rank or more due to contact with N-butanol.

### Example 12

A 500 µm polyethylene terephthalate sheet was covered on the surface of a coating film-stripping solution coated onto the surface of the coating test panel in Example 1, followed by leaving to stand at 20°C for 8 hours. The cured coating film was wholly stripped from the iron plate upper portion through lower portion thereof with little or no difficulty.

### Example 13

A 500 µm polyethylene terephthalate sheet was covered on the surface of a coating film-stripping solution coated onto the surface of the coating test panel in Example 1, followed by leaving to stand at 20°C for 8 hours. The cured coating film was wholly stripped from the iron plate upper portion through lower portion thereof with little or no difficulty.

### Example 14

A coating film-stripping solution coated onto the surface of the coating test panel in Example 1 was left to stand at 50°C for 8 hours. The cured coating film was wholly stripped from the iron plate upper portion through lower portion thereof with little or no difficulty.

### Comparative Example 1

Example 1 was duplicated except that in place of the coating film-stripping solution of Example 1, N-methyl-2-pyrrolidone was used to prepare a coating test panel.

The coating film-stripping solution was coated in the same manner as in Example 1 with the result that the cured coating film of the coating test panel was remained without being stripped.

### Comparative Example 2

Example 2 was duplicated except that in place of the coating film-stripping solution of Example 2, N-methyl-2-pyrrolidone was used to prepare a coating test panel.

The coating film-stripping solution was coated in the same manner as in Example 2 with the result that the cured coating film of the coating test panel was remained without being stripped.

### Comparative Example 3

Example 3 was duplicated except that in place of the coating film-stripping solution of Example 3, N-methyl-2-pyrrolidone was used to prepare a coating test panel.

The coating film-stripping solution was coated in the same manner as in Example 3 with the result that the cured coating film of the coating test panel was remained without being stripped.

### Comparative Example 4

Example 4 was duplicated except that in place of the coating film-stripping solution of Example 4, N-methyl-2-pyrrolidone was used to prepare a coating test panel.

The coating film-stripping solution was coated in the same manner as in Example 4 with the result that the cured coating film of the coating test panel was remained without being stripped.

### Comparative Example 5

Example 5 was duplicated except that in place of the coating film-stripping solution of Example 5, N-methyl-2-pyrrolidone was used to prepare a coating test panel.

The coating film-stripping solution was coated in the same manner as in Example 5 with the result that the cured coating film of the coating test panel was remained without being stripped.

### Comparative Example 6

Example 6 was duplicated except that in place of the coating film-stripping solution of Example 6, N-methyl-2-pyrrolidone was used to prepare a coating test panel.

The coating film-stripping solution was coated in the same manner as in Example 6 with the result that the cured coating film of the coating test panel was remained without being stripped.

### Comparative Example 7

Example 7 was duplicated except that in place of the coating film-stripping solution of Example 7, N-methyl-2-pyrrolidone was used to prepare a coating test panel.

The coating film-stripping solution was coated in the same manner as in Example 7 with the result that the cured coating film of the coating test panel was remained without being stripped.

### Comparative Example 8

Example 8 was duplicated except that in place of the coating film-stripping solution of Example 8, N-methyl-2-pyrrolidone was used to prepare a coating test panel.

The coating film-stripping solution was coated in the same manner as in Example 8 with the result that the cured coating film of the coating test panel was remained without being stripped.

### Comparative Example 9

Example 9 was duplicated except that in place of the coating film-stripping solution of Example 9, N-methyl-2-pyrrolidone was used to prepare a coating test panel.

The coating film-stripping solution was coated in the same manner as in Example 9 with the result that the cured coating film of the coating test panel was remained without being stripped.

### Comparative Example 10

Example 10 was duplicated except that in place of the coating film-stripping solution of Example 10, N-methyl-2-pyrrolidone was used to prepare a coating test panel.

The coating film-stripping solution was coated in the same manner as in Example 10 with the result that the cured coating film of the coating test panel was remained without being stripped.

## Claims

1. A coating film-stripping solution containing, at least one stripping substance
selected from the group consisting of alkali metals, alkali metal compounds, phosphoric acids, phosphoric acid compounds, phosphates, organic acids and organic acid salts, and an amide compound.

2. A coating film-stripping solution as claimed in claim 1, wherein the stripping substance is a lower alkoxyalkali metal compound.

3. A coating film-stripping solution as claimed in claim 2, wherein the lower alkoxyalkali metal is sodium ethoxide.

4. A coating film-stripping solution as claimed in any one of claims 1 to 3, wherein the coating film-stripping solution further contains a stripping co-solvent.

5. A coating film-stripping solution as claimed in claim 4, wherein the stripping co-solvent is a solvent to cause a coating film to be stripped to swell.

6. A coating film-stripping solution as claimed in either claim 4 or claim 5, wherein the stripping co-solvent is a mixed solvent of a solvent (A) having a water-solubility of 5% by weight or more with a solvent (B) having a water-solubility less than 5% by weight.

7. A coating film-stripping method, which comprises coating a coating film-stripping-Solution as claimed in any one of claims 1-6 onto the surface of a cured coating film adhered to a substrate, followed by stripping the cured coating film.

8. A coating film-stripping method, which comprises coating a coating film-stripping solution as claimed in any one of claims 1-6 onto the surface of a cured coating film adhered to a substrate, followed by washing with water to strip the cured coating film, and drying.

9. A coating film-stripping method, which comprises coating a coating film-stripping solution as claimed in any one of claims 1-6 onto the surface of a cured coating film adhered to a substrate, followed by stripping the cured coating film, washing with water, and drying.

10. A coating film-stripping method as claimed in claim 8 or 9, wherein coating of the coating film-stripping solution as claimed in any one of claims 1-6 onto the surface of the cured coating film adhered to the substrate is followed by heating at a temperature of 40 to 100°C.

11. A coating film-stripping method as claimed in claim 8 or 9, wherein coating of the coating film-stripping solution as claimed in any one of claims 1-6 onto the surface of the cured coating film adhered to the substrate is followed by partly or wholly covering the surface of the resulting coating film with a sheet.
